# EUROPÄISCHE PATENTSCHRIFT

(11) **EP 2 478 629 B1**
(45) Veröffentlichungstag und Bekanntmachung des Hinweises auf die Patenterteilung: **13.06.2018**
(21) Anmeldenummer: 10751969.6
(22) Anmeldetag: 14.09.2010
(51) Int. Cl.: H05B 33/08, H02M 3/158

(54) **BETRIEBSGERÄT FÜR LEUCHTMITTEL**
OPERATING DEVICE FOR LUMINOUS ELEMENTS
BALLAST POUR MOYENS D'ÉCLAIRAGE

(30) Priorität: 14.09.2009 DE 102009041515
(43) Veröffentlichungstag der Anmeldung: 25.07.2012
(73) Patentinhaber: Tridonic AG, 8755 Ennenda (CH)
(72) Erfinder: ZIMMERMANN, Michael, CH-8888 Heiligkreuz (CH); PEREIRA, Eduardo, CH-8854 Siebnen (CH); KELLER, Ueli, CH-8738 Uetliburg (CH)
(74) Vertreter: Rupp, Christian
(86) Internationale Anmeldenummer: PCT/EP2010/063457
(87) Internationale Veröffentlichungsnummer: WO 2011/029953

(56) Entgegenhaltungen:
- EP-A1- 1 148 624
- EP-A2- 1 521 354
- WO-A1-2005/013468
- DE-A1- 10 012 362
- DE-A1- 19 946 025
- US-A- 4 924 109
- US-A1- 2003 193 364
- US-A1- 2008 084 197
- US-B1- 6 992 906
- US-B2- 6 535 400
- US-B2- 7 196 914

## Beschreibung

Die Erfindung betrifft Betriebsgeräte für Leuchtmittel. Die Erfindung kann Anwendung finden bspw. in Betriebsgeräten ("Konvertern") für OLEDs, LEDs, oder DC-Halogenlampen.

Bekanntlich fällt über Dioden im Durchlass eine nicht unbeachtliche Durchflussspannung von beispielsweise 0,8V ab. Bei kleinen Ausgangsspannungen und entsprechend hohen Strömen entstehen dadurch beachtliche Gleichrichtungsverluste. So liegen die Verluste bei einem Mittelpunktsgleichrichter (2 Dioden) für einen 100W Konverter mit 8A bspw. bei etwa 6,4W. An einem 10 mOhm-Widerstand entsteht im Vergleich dazu bei einem Strom von 8A nur eine Verlustleistung von 0,64W.

Es ist bereits aus der DE 10012362A1 bekannt, zur Gleichrichtung von Wechselspannungen anstelle von Dioden elektronische Schalterelemente zu verwenden, die im Rhythmus der Wechselspannung so gesteuert werden, dass sie in der einen Polaritätsphase leitend und in der anderen nichtleitend sind. Bei derartig aktiv gesteuerten Schalterelementen ist es jedoch schwierig, allein durch Auswertung der gleichzurichtenden Wechselspannung die genauen Umschaltzeitpunkte zu bestimmen.

US6992906 A1, US6535400 B2 und EP1148624 A1 stellen weiteren Stand der Technik für die vorliegende Anmeldung dar.

Der Erfindung liegt daher die Aufgabe zugrunde, ein Verfahren und eine Schaltungsanordnung zum Gleichrichten einer Wechselspannung anzugeben, das/die weiterhin mit Dioden arbeitet, bei dem/der aber die Vorwärtsverluste der Dioden signifikant reduziert werden können.

Die Aufgabe wird gelöst durch die Merkmale der unabhängigen Ansprüche. Die abhängigen Ansprüche betreffen zweckmäßige Ausgestaltungen der Erfindung.

Ein erster Aspekt betrifft ein Betriebsgerät für Leuchtmittel, insbesondere LEDs, OLEDs oder Halogenlampen, aufweisend eine Schaltungsanordnung zum Gleichrichten einer Wechselspannung mit mindestens einer Diode (D1), wobei zu der Diode ein durch ein elektronisches Schalterelement parallel geschaltet ist, das einen geringeren Durchlasswiderstand als die Diode hat, und dass Steuermittel für das Schalterelement vorgesehen sind, die gewährleisten, dass die Durchlassdauer des Schalterelementes innerhalb derjenigen der Diode liegt.

Die Steuermittel können ferner gewährleisten, dass die Durchlassdauer des Schalterelementes früher als diejenige der Diode endet.

Die Steuermittel können das Schalterelement so steuern, dass die Durchlassdauer des Schalterelementes unter Auswertung der vorangegangenen Sperrperioden der Diode dynamisch adaptiert wird.

Die Steuermittel können das Schalterelement so steuern, dass die Durchlassdauer für das Schalterelement zunächst kurz im Vergleich zu der Durchlassdauer der Diodebemessen ist und dann sukzessive erhöht wird,
und dass die Durchlassdauer für das Schalterelement wieder verkürzt wird, wenn diese später als die Durchlasszeit der Diode endet.

Die Steuermittel können einen Schaltregler aufweisen, der die Spannung über der Diode direkt oder indirekt misst und sie für die Steuerung des Schalterelementes auswertet.

Die Steuermittel können die Serienschaltung aus einem Vorwiderstand, einer weiteren Diode und einem Puffer-Kondensator aufweisen, die zu dem Schalterelement parallel geschaltet ist. Der der Schaltregler einerseits mit dem Verbindungspunkt zwischen dem Vorwiderstand und der weiteren Diode und andererseits mit dem Verbindungspunkt zwischen dem Puffer-Kondensator und dem Schalterelement verbunden ist.

Das Schalterelement kann ein Feldeffekttransistor sein, dessen Source-Anschluss mit dem einen Anschluss der erstgenannten Diode verbunden ist, dessen Drain-Anschluss mit dem anderen Anschluss der erstgenannten Diode verbunden ist, und dessen Gate-Anschluss mit dem SteuerAusgang des Schaltreglers verbunden ist.

Die erstgenannte Diode kann dabei die Body-Diode des Feldeffekttransistors sein.

Die erstgenannte Diode, das Schalterelement, der Vorwiderstand, die weitere Diode und der Schaltregler können zu einer integrierten Halbleiter-Schaltereinheit gehören,
und dass der Puffer-Kondensator in Bezug auf die Halbleiter-Schaltereinheit ein externes Bauelement ist.

In dem Betriebsgerät können integrierte Halbleiter-Schaltereinheiten in einem Mittelpunktsgleichrichter oder in einem Brückengleichrichter mit Einkopplung der Wechselspannung über einen Transformator verwendet werden.

Ein weiterer Aspekt betrifft ein Betriebsgerät für mindestens ein Leuchtmittel, insbesondere eine LED,
wobei eine Netzspannung zunächst in einer ersten Gleichrichter-Stufe gleichgerichtet wird,
wobei dann die so erzeugte Gleichspannung in einem DC/AC-Wandler wieder in eine Wechselspannung höherer Frequenz als die der Netzspannung umgewandelt wird,
wobei der Spannungswert der so erzeugten Wechselspannung höherer Frequenz transformatorisch reduziert wird,
wobei die transformatorisch reduzierte Wechselspannung in einer zweiten Gleichrichterstufe erneut zur Versorgung der mindestens einen LED gleichgerichtet wird, und wobei die integrierten Halbleiter-Schaltereinheiten zumindest in der zweiten Gleichrichterstufe eingesetzt sind.

Der Grundgedanke der Erfindung besteht also darin, eine Diode mit einem zu dieser parallel geschalteten aktiv steuerbaren Schalterelement zu kombinieren, das einen geringeren Durchlasswiderstand als die Diode hat. Das Schalterelement wird dann so gesteuert, dass es - wenn die Diode in den Durchlasszustand übergegangen ist - den Durchlassstrom weitgehend übernimmt.

Die Kombination von aktiv gesteuertem Schalterelement mit einer Diode erlaubt es auch, die oben erwähnte Schwierigkeit zu überwinden, die genauen Umschaltzeitpunkte für das Schalterelement bestimmen zu können. Letztere werden nunmehr anhand der messbaren Umschaltung der Diode bzw. unter Auswertung der Historie der Sperrperioden der Diode bestimmt.

Vorzugsweise wird die Einschaltdauer für das Schalterelement kürzer als die der Diode gewählt, was erlaubt, sie später beginnen und/oder früher enden zu lassen.

Zweckmäßigerweise wird die Durchlassdauer des Schalterelementes dynamisch adaptiert, in der Weise, dass das Schalterelement immer in den Sperrzustand umgeschaltet wird, bevor der Stromfluss durch dieses Null wird oder seine Polarität wechselt.

Beim Umschalten des Schalterelementes vom Sperrzustand auf Durchlass kann man zur Realisierung der gewünschten Einschaltverzögerung gegenüber der Diode die technisch bedingte Verzögerung ausnutzen, die bei dem Schalterelement natürlicherweise zwischen der Ausgabe des Umschaltsignals und dem tatsächlichen Umschalten auftritt. Das Umschaltsignal wird dann ausgegeben, wenn festgestellt wird, dass die Diode vom Sperrzustand in den Durchlasszustand übergeht.

Für die Bestimmung des Zeitpunktes des Umschaltens des Schalterelementes vom Durchlasszustand in den Sperrzustand gibt es mehrere Möglichkeiten. Eine erste Möglichkeit ist die, die Frequenz bzw. zeitliche Taktung eines zurückliegenden Ein-/Aus-Zyklus zu erfassen, auszuwerten und das Umschaltsignal für die nächste Umschaltung des Schalterelementes mit einer Sicherheitsmarge zu beaufschlagen. Wenn sich die Frequenz der gleichzurichtenden Wechselspannung in relativ kleinen (inkrementellen) Schritten ändert, so gewährleistet die Sicherheitsmarge, dass das Schalterelement immer zeitlich vor der Diode in den Sperrzustand übergeht.

Was die Schaltungsanordnung betrifft, so erlaubt es die Erfindung, eine neuartige Halbleiter-Schaltereinheit zu kreieren, die sich dadurch auszeichnet, dass das Schalterelement und die Diode in diesem integriert sind. Bei Ausbildung des Schalterelementes als Feldeffekttransistor kann die Diode dessen Body-Diode sein.

Eine solche Halbleiter-Schaltereinheit kann ferner einen - ebenfalls integrierten - Schaltregler enthalten, der die aktuelle Spannung über der Diode auswertet, um die Umschaltsignale für das Schalterelement zu erzeugen. Die Energie zum Betreiben des Schaltreglers und zum Erzeugen der Umschaltsignale können durch zusätzliche Gleichrichtung aus der gleichzurichtenden Gleichspannung gewonnen werden. Die durch diese zusätzliche Gleichrichtung gewonnene Arbeitsspannung kann in einem Puffer-Kondensator gespeichert werden, der vorzugsweise in Bezug auf die integrierte Halbleiter-Schaltereinheit als externes Bauelement ausgeführt ist.

Halbleiter-Schaltereinheiten der vorstehend angegebenen Art können in den verschiedensten Schaltungsanordnungen zur Gleichrichtung von Wechselspannungen Anwendung finden, bei denen eine Gleichrichter-Diode vorgesehen ist (beispielsweise in AC/DC-Wandlern, Flyback-Konvertern usw.). Es versteht sich, dass sie sich insbesondere dort für einen Einsatz empfehlen, wo kleine Spannungen und hohe Ströme auftreten, beispielsweise in Vorschaltgeräten zum Betreiben von LEDs, wobei die Spannungsquelle das Netz ist.

Wenn derartige Halbleiter-Schaltereinheiten in mehrfacher Zahl beispielsweise in Mittelpunkts-Gleichrichtern oder Brückengleichrichtern eingesetzt werden, so empfiehlt es sich die Ansteuerung der einzelnen Halbleiter-Schaltereinheiten aufeinander abzustimmen bzw. zu synchronisieren, indem die Messergebnisse der Schaltregler simultan ausgewertet werden oder indem man die Halbleiter-Schaltereinheiten miteinander kommunizieren lässt. Dies alles mit dem Ziel, die Halbleiter-Schaltereinheiten innerhalb des Gesamtverbunds "sanft" zu- oder wegzuschalten.

Ausführungsbeispiele der Erfindung werden nachfolgend anhand der Zeichnungen beschrieben.

Es zeigen:
Figur 1 eine erfindungsgemäße Halbleiter-Schaltereinheit;
Figur 2 die Halbleiter-Schaltereinheit gemäß Figur 1 als eigenständiges Schaltsymbol;
Figur 3 eine Darstellung der durch den Schaltregler gemessenen Spannung V_{Sense} in Abhängigkeit von der Zeit;
Figur 4 einen üblichen Mittelpunktsgleichrichter, hier allerdings unter Verwendung von Halbleiter-Schaltereinheiten gemäß Figur 1 bzw. Figur 2;
Figur 5 einen üblichen Brückengleichrichter, hier allerdings unter Verwendung von Halbleiter-Schaltereinheiten gemäß Figur 1 bzw. Figur 2;
Figur 6 ein mit Wechselspannung, insbesondere Netzspannung zu betreibendes Vorschaltgerät für eine oder mehrere LEDs, OLEDs oder DC-Halogenlampen, wobei das Vorschaltgerät zur Gleichrichtung Halbleiter-Schaltereinheiten gemäß Figur 1 bzw. Figur 2 verwendet.

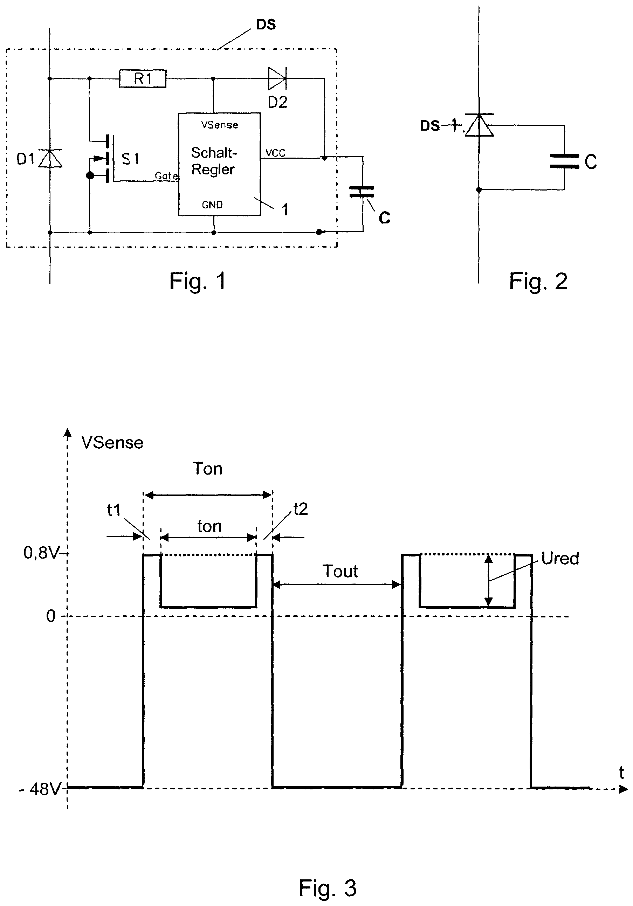

In **Figur 1** befindet sich eine zur Gleichrichtung einer Wechselspannung bestimmte erste Diode D1 in einer die Wechselspannung führenden Leitung. Parallel zu der ersten Diode D1 liegt ein elektronisches Schalterelement S in Form eines MOS-FETs, wobei die Diode D1 die Body-Diode des MOS-FETs sein kann. Der Source-Anschluss des MOS-FETs ist mit dem einen Anschluss der Diode D1 und der Drain-Anschluss des MOS-FETS ist mit dem anderen Anschluss der Diode D1 verbunden. Der Gate- Anschluss des MOS-FETs ist mit dem Steuersignal-Ausgang eines Schaltreglers 1 verbunden. Dieser wird über eine Serienschaltung aus einem Vorwiderstand R1, einer weiteren Diode D2 und einem Puffer-Kondensator C mit Spannung versorgt. Dazu ist der eine Endpunkt der Serienschaltung mit dem einen Anschluss und der andere Endpunkt der Serienschaltung mit dem anderen Anschluss der ersten Diode D1 verbunden. Der Schaltregler 1 greift die für ihn bestimmte Versorgungsgleichspannung VCC an dem Puffer-Kondensator C ab. Die Versorgungsgleichspannung VCC wird mittels des Vorwiderstandes R1 und der weiteren Diode D2 durch Gleichrichtung der gleichzurichtenden Wechselspannung gewonnen und in dem Puffer-Kondensator C gespeichert.

Der Schaltregler 1 tastet an dem Verbindungspunkt zwischen dem Vorwiderstand R1 und der weiteren D2 die Spannung V_{Sense} ab, die der über der ersten Diode D1 abfallenden Spannung entspricht und Informationen darüber liefert, wann die Diode D1 leitend bzw. nichtleitend wird.

Die erste Diode D1, das Schalterelement S, der Schaltregler 1, der Vorwiderstand R1 und die zweite Diode D2 bilden eine integriertes Halbleiter-Schaltereinheit DS bzw. sind integrierte Teile desselben. Der Puffer-Kondensator C ist in Bezug auf die integrierte Halbleiter-Schaltereinheit DS ein externes Bauelement.

In **Figur 2** ist die Halbleiter-Schaltereinheit als eigenständiges Schaltsymbol mit drei Anschlüssen dargestellt, dass in den nachfolgend beschriebenen Schaltungsanordnungen verwendet ist.

Die Steuerung des Schalterelementes S durch den Schaltregler 1 wird nachfolgend anhand der in **Figur 3** dargestellten zeitlichen Spannungsverläufe beschrieben.

**Figur 3** zeigt die von dem Schaltregler 1 gegen Masse GND gemessene Spannung V_{Sense}. Diese zeigt, dass über der Diode 1 wechselweise eine Spannung zwischen -48V und +0,8V abfällt. Wenn die an der Diode D1 liegende Wechselspannung kleiner als +0,8V ist, sperrt die Diode. Wenn die Wechselspannung dagegen über +0,8V ansteigt, wird die Diode D1 leitend, wobei der Spannungsabfall über der Diode D1 auch dann nicht unter +0,8V sinkt, wenn die gleichzurichtende Wechselspannung einen Spannungswert von über +0,8V annimmt. Das hat zur Folge, dass an der Diode D1 im Durchlasszustand eine beachtliche Verlustleistung entsteht, die sich aus dem dem Produkt des durch die Diode D1 fließenden Stromes und der Durchflussspannung von 0,8V ergibt. Wie eingangs beschrieben, kann diese Verlustleistung beachtlich sein und ist in jedem Fall unerwünscht.

Um die Verlustleistung zu reduzieren, wurde zu der Diode D1 ein Schalterelement S parallel geschaltet, das über dem im Durchlass-Zustand eine wesentlich geringere Durchflussspannung abfällt, als an der Diode D1. Das ist gleich bedeutend damit, dass der Durchlasswiderstand des Schalterelementes S wesentlich geringer ist als der der Diode D1. Der Unterschied zwischen den Durchflussspannungen ist in Figur 3 mit Vred bezeichnet. Die Reduzierung der Verlustleistung ergibt sich als Produkt aus Vred und dem durch die Kombination aus der Diode D1 und dem Schalterelement S fließenden Strom.

Das Schalterelement S wird nun so gesteuert, dass seine Durchlassdauer ton innerhalb der Durchlassdauer Ton der Diode D1 liegt. D.h. die Durchlassdauer des Schaltelements beginnt frühestens und endet spätestens mit der Durchlassdauer der Diode, kann aber auch später beginnen und/oder früher enden.

Im Ausführungsbeispiel beginnt die Durchlassdauer ton des Schalterelementes S um die Verzögerungszeit t1 später als die Durchlassdauer Ton der Diode D1 und endet um die Margenzeit t2 früher als diese.

Es versteht sich, dass die Verzögerungszeit t1 und die Margenzeit t2 möglichst kurz sein sollten (idealerweise 0, Schaltzeiten mitgerechnet). Sie sind aber notwendig, um zu gewährleisten, dass das Schalterelement S den wesentlichen Stromfluss nur dann übernimmt, wenn die Diode sicher leitend ist. Es ist insbesondere wichtig, dass das Schalterelement S im leitenden Zustand noch vor dem Zeitpunkt deaktiviert wird, an dem der Strom Null wird oder die Polarität wechselt. Auf diese Weise wird gewährleistet, dass der Stromfluss zum Ende eines Gleichrichterzyklus wieder über die Diode erfolgt, die ein natürliches Gleichrichterverhalten aufweist. Damit wird auch erreicht, dass das Schalterelement S sicher in den Sperrzustand übergeht bzw. dass der Kanal in dem das Schalterelement S bildenden Halbleiter wieder vollkommen sperrt.

Die Bestimmung der einzelnen Schaltzeitpunkte für das Schalterelement S kann auf mindestens zwei verschiedene Weisen erfolgen.

Bei Gleichrichtersystemen mit einem Tastverhältnis von 50% (beispielsweise bei Netzgleichrichtung) bestimmt der Schaltregler 1 den Einschaltzeitpunkt für den Beginn der Durchlasszeit des Schalterelementes S indem er - verzögert um t1 - dann ein Einschaltsignal abgibt, wenn die Messspannung V_{Sense} gegen Masse GND Null wird oder die Polarität wechselt. Die Durchlassdauer ton für das Schalterelement S legt der Schaltregler 1 dann aufgrund der ebenfalls über V_{Sense} erfolgenden Überwachung und Auswertung der vorangegangenen Durchlassperioden Ton der Diode D1 fest.

Bei PWM-Systemen wird ebenfalls die Historie der vorangegangenen Umschaltvorgänge der Diode D1 ausgewertet. Der Schaltregler 1 deaktiviert dazu das Schalterelement S für einige Zyklen. Danach schaltet er das Schalterelement 1 nur mit einer sehr kurzen Zeitspanne ton auf Durchlass und erhöht ton dann sukzessive mit jedem Zyklus. Dies wird solange fortgesetzt, wie über V_{Sense} noch ein Spannungsanstieg am Ende von ton feststellbar ist. Wenn das nicht mehr der Fall ist, wird die Durchlasszeit ton für das Schalterelement S wieder reduziert bis wieder ein Spannungsanstieg messbar ist.

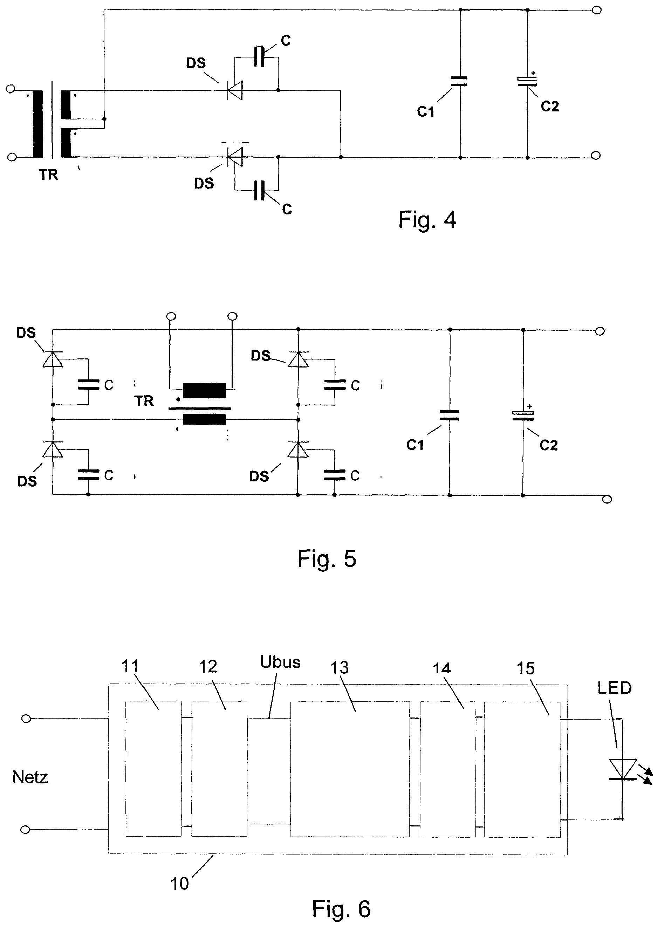

**Figur 4** zeigt den Einsatz von zwei Halbleiter-Schaltereinheiten DS mit Puffer-Kondensatoren C in einem an sich bekannten Mittelpunkts-Gleichrichter. Die Wechselspannung wird über einen Transformator mir einer Primärwicklung und zwei symmetrischen Sekundärwicklungen eingekoppelt. Durch die Gleichrichtung wird eine pulsierende Gleichspannung erzeugt, die durch einen Elektrolytkondensator C2 geglättet wird. Der kleinere Kondensator C1 dient zur Unterdrückung von störenden Oberwellen.

**Figur 5** zeigt den Einsatz von vier Halbleiter-Schaltereinheiten DS mit Puffer-Kondensatoren C in einem an sich bekannten Brücken-Gleichrichter. Die Wechselspannung wird über einen Transformator mir einer Primärwicklung und einer Sekundärwicklungen eingekoppelt, wobei letztere in einem Brückenzweig der von den vier Halbleiter-Schalter-Einheiten DS gebildeten GleichrichterBrücke liegt. Durch die Gleichrichtung wird eine pulsierende Gleichspannung erzeugt, die durch einen Elektrolytkondensator C2 geglättet wird. Der kleinere Kondensator C1 dient zur Unterdrückung von störenden Oberwellen.

**Figur 6** zeigt ein an sich bekanntes Vorschaltgerät 10 zum Betreiben mindestens einer LED, OLED oder DC-Halogenlampe oder anderer DC versorgter Leuchtmittel ausgehend von einer Wechselspannung, bspw. einer Netzspannung. Die Netzspannung wird in einem ersten Gleichrichter-Schaltungsteil 12 gleichgerichtet. Zur Vermeidung der Rückstrahlung von bei der Gleichrichtung entstehenden unerwünschten Oberwellen in das Netz ist zwischen den ersten Gleichrichter-Schaltungsteil 12 und dem Netzeingang noch eine Oberwellenfilter eingefügt. Darüber hinaus ist der erste Gleichrichter-Schaltungsteil 12 noch mit einer aktiv getakteten PFC-Stufe versehen, die ihrerseits dafür sorgt, dass der dem Netz entnommene Strom möglichst sinusförmig ist.

Der erste Gleichrichter-Schaltungsteil 12 erzeugt eine durch die PFC-Stufe geregelte Gleichspannung Ubus. Diese wird in einem DC/AC-Wandler 13 mit Transformator, der auch für eine Potentialtrennung sorgt, wieder in eine Wechselspannung umgeformt, deren Spannungswert erheblich geringer als derjenige der Netzspannung und damit an den Betriebsspannungswert der LED angeglichen ist. Entsprechend wird der Strom hochtransformiert.

Die so erzeugte Wechselspannung wird in einem zweiten Gleichrichter-Schaltungsteil 14 erneut gleichgerichtet. Diese zweite Gleichrichter-Stufe 14 muss kleine Spannungen, aber hohe Ströme verarbeiten. Hier bietet sich der Einsatz der oben beschriebenen Halbleiter-Schaltereinheiten DS an.

Die Ausgangsspannung der zweiten Gleichrichter-Stufe 14 kann noch weiter aufbereitet, bspw. moduliert, insbesondere PWM-moduliert werden, bevor sie den Leuchtmitteln zugeführt wird. Die Leuchtmittel werden also allgemein ausgehend von der Ausgangsspannung der zweiten Gleichrichter-Stufe 14 versorgt.

In einer letzten Stufe 15 erfolgt eine weitere Filterung auf Oberwellen sowie eine Anpassung an den Strombedarf der mit dem Vorschaltgerät zu betreibenden LED durch eine entsprechende Regelschaltung.

## Patentansprüche

1. Betriebsgerät für Leuchtmittel, insbesondere LEDs, OLEDs oder Halogenlampen,
aufweisend:
- einen DC/AC-Wandler mit Transformator zur Bereitstellung einer Wechselspannung, und
- eine Schaltungsanordnung zum Gleichrichten der Wechselspannung mit mindestens einer Diode (D1),
wobei zu der Diode (D1) ein elektronisches Schalterelement (S) parallel geschaltet ist, das einen geringeren Durchlasswiderstand als die Diode (D1) hat,
und Steuermittel für das Schalterelement (S) vorgesehen sind, die gewährleisten, dass die Durchlassdauer (ton) des Schalterelementes (S) innerhalb derjenigen (Ton) der Diode (D1) liegt, wobei das Steuermittel ein Schaltregler (1) ist, der eine Spannung (VSense), die der über der ersten Diode (D1) abfallenden Spannung entspricht, an einem Verbindungspunkt zwischen einem Vorwiderstand (R1) und einer weiteren Diode (D2) erfasst und auswertet und abhängig davon Umschaltsignale für das Schalterelement (S) erzeugt,
wobei der Schaltregler (1) über eine Serienschaltung aus dem Vorwiderstand (R1), der weiteren Diode (D2) und einem Puffer-Kondensator (C) mit Spannung versorgt ist,
wobei die Serienschaltung zu dem Schalterelement (S) parallel geschaltet ist, und
wobei die Steuermittel das Schalterelement (S) so steuern, dass die Durchlassdauer (ton) für das Schalterelement (S) zunächst kurz im Vergleich zu der Durchlassdauer (Ton) der Diode (D1) bemessen ist und dann sukzessive erhöht wird,
und dass die Durchlassdauer (ton) für das Schalterelement (S) wieder verkürzt wird, wenn diese später als die Durchlasszeit (Ton) der Diode (S) endet.

2. Betriebsgerät nach Anspruch 1,
**dadurch gekennzeichnet,**
**dass** zu den Steuermitteln die Serienschaltung aus dem Vorwiderstand (R1), der weiteren Diode (D2) und dem Puffer-Kondensator (C) gehört, die zu dem Schalterelement (S) parallel geschaltet ist,
**dass** der Schaltregler (1) einerseits mit dem Verbindungspunkt zwischen dem Vorwiderstand (R1) und der weiteren Diode (D2) und andererseits mit dem Verbindungspunkt zwischen dem Puffer-Kondensator (C) und dem Schalterelement (S) verbunden ist.

3. Betriebsgerät nach Anspruch 2,
**dadurch gekennzeichnet,**
**dass** das Schalterelement (S) ein Feldeffekttransistor ist, dessen Source-Anschluss mit dem einen Anschluss der erstgenannten Diode (D1) verbunden ist, dessen Drain-Anschluss mit dem anderen Anschluss der erstgenannten Diode (D1) verbunden ist, und dessen Gate-Anschluss mit dem SteuerAusgang des Schaltreglers (1) verbunden ist.

4. Betriebsgerät nach Anspruch 3,
**dadurch gekennzeichnet,**
**dass** die erstgenannte Diode die Body-Diode des Feldeffekttransistors ist

5. Betriebsgerät nach einem der Ansprüche 2 bis 4,
**dadurch gekennzeichnet,**
**dass** die erstgenannte Diode (D1), das Schalterelement (S), der Vorwiderstand (R1), die weitere Diode (D2) und der Schaltregler (S) zu einer integrierten Halbleiter-Schaltereinheit (DS) gehören,
und **dass** der Puffer-Kondensator (C) in Bezug auf die Halbleiter-Schaltereinheit (1) ein externes Bauelement ist.

6. Betriebsgerät nach einem der vorhergehenden Ansprüche, bei dem integrierte Halbleiter-Schaltereinheiten (DS) in einem Mittelpunkt-Gleichrichter oder in einem Brückengleichrichter mit Einkopplung der Wechselspannung über einen Transformator verwendet werden.

## Claims

1. An operating device for luminous elements, in particular LEDs, OLEDs, or halogen lamps,
having:
- a DC/AC transducer with transformer for providing an alternating voltage,
and
- a circuit assembly for rectifying the alternating voltage with at least one diode (D1),
wherein an electronic switch element (S) is connected in parallel to the diode (D1), which has a lower forward resistance than the diode (D1),
and control means are provided for the switch element (S), which ensure that the on-state duration (ton) of the switch element (S) is within that (Ton) of the diode (D1), wherein the control means is a switching regulator (1), which detects and evaluates a voltage (VSense),which corresponds to the voltage dropping across the first diode (D1), at a connecting point between a series resistor (R1) and a further diode (D2) and depending thereon generates switching signals for the switch element (S),
wherein the switching regulator (1) is supplied with voltage via a series circuit consisting of the series resistor (R1), the further diode (D2) and a buffer capacitor (C),
wherein the series circuit is connected in parallel to the switch element (S), and wherein the control means controls the switch element (S) such that the on-state duration (ton) for the switch element (S) is initially measured briefly in comparison to the on-state duration (Ton) of the diode (D1) and then is increased gradually, and that the on-state duration (ton) for the switch element (S) is shortened again, if this ends later than the on-state time (Ton) of the diode (S).

2. An operating device according to Claim 1,
**characterized in**
**that** the control means includes the series circuit consisting of the series resistor (R1), the further diode (D2) and the buffer capacitor (C), which is connected in parallel to the switch element (S),
**that** the switching regulator (1) is connected, on the one hand, with the connecting point between the series resistor (R1) and the further diode (D2) and, on the other hand, with the connecting point between the buffer capacitor (C) and the switch element (S).

3. An operating device according to Claim 2,
**characterized in**
**that** the switch element (S) is a field-effect transistor, the source connection of which is connected with the one connection of the first-mentioned diode (D1), the drain connection of which is connected with the other connection of the first-mentioned diode (D1) and the gate connection of which is connected with the control output of the switching regulator (1).

4. An operating device according to Claim 3,
**characterized in**
**that** the first-mentioned diode is the body diode of the field-effect transistor.

5. An operating device according to any one of Claims 2 to 4,
**characterized in**
**that** the first-mentioned diode (D1), the switch element (S), the series resistor (R1), the further diode (D2) and the switching regulator (S) belong to an integrated semi-conductor switch unit (DS),
and **that** the buffer capacitor (C) is an external component with respect to the semi-conductor switch unit (1).

6. An operating device according to any one of the preceding claims, in which integrated semi-conductor switch units (DS) are used in a midpoint-rectifier or in a bridge rectifier with coupling of the alternating voltage via a transformer.

## Revendications

1. Appareil de commande pour moyens d'éclairage, plus particulièrement des LED, des OLED ou des lampes halogènes, comprenant :
- un convertisseur DC/AC avec un transformateur pour la fourniture d'une tension alternative et
- un dispositif à circuit pour le redressement de la tension alternative avec au moins une diode (D1),
moyennant quoi, à la diode (D1), est branché en parallèle un élément de commutateur électronique (S), qui présente une résistance de passage plus faible que la diode (D1),
et un moyen de commande pour l'élément de commutateur (S) étant prévus, qui garantissent que la durée de passage (ton) de l'élément de commutateur (S) se trouve à l'intérieur de celle (Ton) de la diode (D1), le moyen de commande étant un régulateur de commutation (1) qui mesure et analyse une tension (Vsense), qui correspond à la tension au niveau de la première diode (D1), au niveau d'un point de liaison entre une pré-résistance (R1) et une autre diode (D2) et génère en fonction de celle-ci des signaux de commutation pour l'élément de commutateur (S),
le régulateur de commutation (1) étant alimenté avec une tension par l'intermédiaire d'un circuit en série constitué de la pré-résistance (R1), de l'autre diode (D2) et d'un condensateur-tampon (C),
le circuit en série étant branché en parallèle à l'élément de commutateur (S) et les moyens de commande commandent l'élément de commutateur (S) de façon à ce que la durée de passage (ton) pour l'élément de commutateur (S) est d'abord courte par rapport à la durée de passage (Ton) de la diode (D1) puis elle est progressivement augmentée,
et la durée de passage (ton) pour l'élément de commutateur (S) est à nouveau raccourcie lorsque celle-ci se termine plus tard que le temps de passage (Ton) de la diode (S).

2. Appareil de commande selon la revendication 1,
**caractérisé en ce que**
aux moyens de commande appartient le circuit en série constitué de la pré-résistance (R1), de l'autre diode (D2) et le condensateur-tampon (C), qui est branché en parallèle à l'élément de commutateur (S),
le régulateur de commutation (1) est relié d'une part avec le point de liaison entre la pré-résistance (R1) et l'autre diode (D2) et d'autre part avec le point de liaison entre le condensateur-tampon (C) et l'élément de commutateur (S).

3. Appareil de commande selon la revendication 2,
**caractérisé en ce que**
l'élément de commutateur (S) est un transistor à effet de champ, dont la source est reliée avec une borne de la diode (D1) mentionnée en premier, dont le drain est relié à l'autre borne de la diode (D1) mentionnée en premier et dont le grille est reliée avec la sortie de commande du régulateur de commutation (1).

4. Appareil de commande selon la revendication 3,
**caractérisé en ce que**
la diode mentionnée en premier est la diode de corps du transistor à effet de champ.

5. Appareil de commande selon l'une des revendications 2 à 4,
**caractérisé en ce que**
la diode (D1) mentionnée en premier, l'élément de commutateur (S), la pré-résistance (R1), l'autre diode (D2) et le régulateur de commutation (S) appartiennent à une unité de commutateur intégrée à semi-conducteur (DS),
et **en ce que** le condensateur-tampon (C) est un composant externe par rapport à l'unité de commutateur à semi-conducteur (1).

6. Appareil de commande selon l'une des revendications précédentes, dans lequel des unités de commutateurs à semi-conducteurs (DS) sont utilisées dans un redresseur à point central ou dans un redresseur à pont avec application de la tension alternative par l'intermédiaire d'un transformateur.
